# EUROPEAN PATENT APPLICATION

(11) **EP 3 890 444 A1**
(43) Date of publication of application: **06.10.2021**
(21) Application number: 21166678.9
(22) Date of filing: 01.04.2021
(51) Int. Cl.: H05B 45/22, H05B 47/155, H05B 47/11

(54) **SPECTRA FILL FOR PROVIDING FULL SPECTRUM LIGHT**

(30) Priority: 02.04.2020 US 202063004346 P; 09.03.2021 US 202117195832
(71) Applicant: Goodrich Corporation, Charlotte, NC 28217-4578 (US)
(72) Inventor: JOHANNESSEN, Eric, Holbrook, NY 11741 (US)
(74) Representative: Dehns

(57) **Abstract**

A system (200) for providing full spectrum light in an enclosed space. The system (200) includes a first light source (204) based on a red-green-blue (RGB) model, located in the enclosed space, and configured to generate a first light. The system (200) further includes a second light source separate from the first light source (204), based on an alternative to the RGB model, located in the enclosed space, and configured to generate a second light such that a combination of the first light and the second light has a greater color rendering index (CRI) than the first light alone.

## Description

### CROSS-REFERENCE TO RELATED APPLICATIONS

This application claims priority to, and the benefit of, U.S. Provisional Patent Application Serial No. 63/004,346 filed April 2, 2020 and titled "SPECTRA FILL".

### FIELD

The present disclosure relates to systems and methods for providing light having an improved color rendering index (CRI) in an enclosed space.

### BACKGROUND

Conventional light sources and displays in aircraft are typically based on red-green-blue light models. That is, they are designed to produce a multitude of colors using red, green, and blue as primary colors. While many colors can be represented in this manner, the color rendering index (CRI) is relatively low, causing many objects illuminated by such light sources to appear untrue to their natural color relative to how they appear in sunlight. It is desirable to provide light having an improved CRI in aircraft interiors to increase comfort and happiness of passengers.

### SUMMARY

Disclosed herein is a system for providing full spectrum light in an enclosed space. The system includes a first light source based on a red-green-blue (RGB) model, located in the enclosed space, and configured to generate a first light. The system further includes a second light source separate from the first light source, based on an alternative to the RGB model, located in the enclosed space, and configured to generate a second light such that a combination of the first light and the second light has a greater color rendering index (CRI) than the first light alone.

In any of the foregoing embodiments, the first light source is configured as a display in the enclosed space and the second light source is configured as a complementary light source.

Any of the foregoing embodiments may further include a controller coupled to the first light source and the second light source and configured to control the second light source to generate the second light to complement a spectrum of the first light such that the combination of the first light and the second light results in a more constant spectrum of visible light than the first light alone or the second light alone.

Any of the foregoing embodiments may further include an input device coupled to the controller and configured to receive user input corresponding to a desired light in the enclosed space, wherein the controller is further configured to control the first light source and the second light source to cause the combination of the first light and the second light to produce the desired light.

In any of the foregoing embodiments, the first light source includes at least one of a light emitting diode (LED), an ultra LED, a micro-LED, an organic LED, a quantum dot LED, a liquid crystal display (LCD), a plasma display, or a projector.

In any of the foregoing embodiments, the second light source includes an LED lighting assembly having at least one LED that is a color other than red, green, or blue.

In any of the foregoing embodiments, the first light source includes first lighting elements configured to generate red, green, and blue light; and the second light source includes second lighting elements configured to generate at least one of cyan light, amber light, or lime light.

In any of the foregoing embodiments, the enclosed space is located in an aircraft.

Also disclosed is a control system for providing full spectrum light in an enclosed space. The control system includes a first light source configured to generate a first light. The control system further includes a second light source separate from the first light source and configured to generate a second light that has a different spectrum from the first light. The control system further includes a controller. The control system further includes a tangible, non-transitory memory configured to communicate with the controller, the tangible, non-transitory memory having instructions stored thereon that, in response to execution by the controller, cause the controller to perform operations. The operations include controlling the first light source to generate the first light. The operations further include controlling the second light source to generate the second light such that a combination of the first light and the second light has a greater color rendering index (CRI) than the first light alone.

In any of the foregoing embodiments, the first light source is based on a red-green-blue (RGB) model and the second light source is based on an alternative to the RGB model.

In any of the foregoing embodiments, the operations further comprise controlling the second light source to generate the second light to complement a spectrum of the first light such that the combination of the first light and the second light results in a more constant spectrum of visible light than the first light alone or the second light alone.

In any of the foregoing embodiments, the operations further comprise: analyzing at least one of the first light or the second light; and determining how to control at least one of the first light source or the second light source based on results of the analyzing.

Any of the foregoing embodiments further include an input device configured to receive user input corresponding to a desired light, wherein the operations further comprise controlling the second light source based on the desired light.

In any of the foregoing embodiments, the first light source includes at least one of a light emitting diode (LED), an ultra LED, a micro-LED, an organic LED, a quantum dot LED, a liquid crystal display (LCD), a plasma display, or a projector, and the second light source includes an LED lighting assembly having at least one LED that is a color other than red, green, or blue.

In any of the foregoing embodiments, the first light source includes first lighting elements configured to generate red, green, and blue light; and the second light source includes second lighting elements configured to generate at least one of cyan light, amber light, or lime light.

Also disclosed is a method for providing full spectrum light in an enclosed space. The method includes generating, by a first light source that is based on a red-green-blue (RGB) model, first light. The method further includes generating, by a second light source that is separate from the first light source and is based on an alternative to the RGB model, a second light such that a combination of the first light and the second light has a greater color rendering index (CRI) than the first light alone.

Any of the foregoing embodiments may further include controlling, by a controller, the second light source to generate the second light to complement a spectrum of the first light such that the combination of the first light and the second light results in a more constant spectrum of visible light than the first light alone or the second light alone.

Any of the foregoing embodiments may further analyzing, by the controller, at least one of the first light source or the second light source, and determining, by the controller, how to control at least one of the first light source or the second light source based on results of the analyzing.

Any of the foregoing embodiments may further receiving, by an input device, user input corresponding to a desired light, and controlling, by the controller, the second light source based on the desired light.

In any of the foregoing embodiments, the first light source includes at least one of a light emitting diode (LED), an ultra LED, a micro-LED, an organic LED, a quantum dot LED, a liquid crystal display (LCD), a plasma display, or a projector, and the second light source includes an LED lighting assembly having at least one LED that is a color other than red, green, or blue.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft including various enclosed spaces, in accordance with various embodiments;
FIG. 2 is a block diagram illustrating a system for providing full spectrum light in an enclosed space, in accordance with various embodiments;
FIG. 3 is a flowchart illustrating a method for providing full spectrum light in an enclosed space, in accordance with various embodiments;
FIGS. 4A, 4B, 4C, and 4D illustrate various spectral analyses to illustrate benefits of using the system of FIG. 2, according to various embodiments; and
FIGS. 5A, 5B, 5C, and 5D illustrate an exemplary implementation of the system of FIG. 2 along with spectral analyses, according to various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

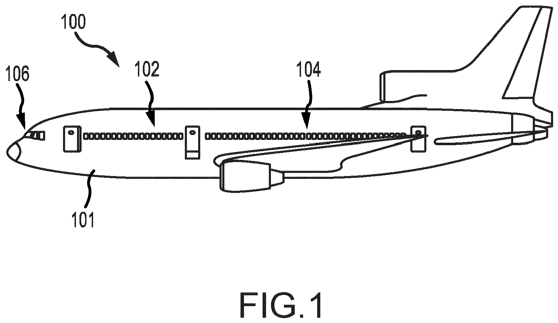

Referring now to FIG. 1, an aircraft 100 is shown. The aircraft 100 may include a fuselage 101 having or defining one or more enclosed spaces such as a first passenger cabin 102, a second passenger cabin 104, and a cockpit 106. Each of the enclosed spaces may include a system for providing full spectrum, or improved spectrum, light.

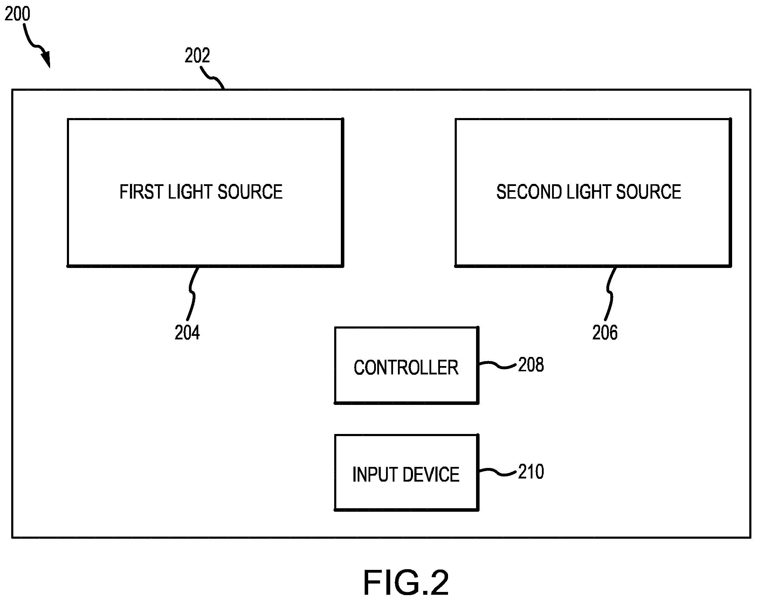

Turning to FIG. 2, an exemplary system 200 may be used to provide full-spectrum light in an enclosed space 202. Full spectrum may refer to the fact that some light is present in most (e.g., at least 80 percent) or all of the visible light spectrum. The system 200 may include a first light source 204, a second light source 206, a controller 208, and an input device 210.

The first light source 204 may include any light source that is based on a red-green-blue (RGB) model. In that regard, the first light source 204 may include first lighting elements configured to generate red, green, and blue light. In various embodiments, the first light source 204 may be configured as a display in the enclosed space 202. For example, the first light source 204 may be located on a ceiling of the enclosed space 202 and may be designed to display information representing an illuminated sky, a dark sky, clouds, or the like. In various embodiments, the first light source 204 may include at least one of a light emitting diode (LED), an ultra LED, a micro-LED, an organic LED, a quantum dot LED, a liquid crystal display (LCD), a plasma display, or a projector.

The second light source 206 may be separate from the first light source 204 and may include any light source that is based on an alternative to the RGB model. For example, the second light source 206 may include elements designed to generate at least one color other than red, green, or blue. For example, second light source 206 may include an LED lighting assembly having at least one LED that is a color other than red, green, or blue (e.g., the at least one LED may be designed to generate at least one of cyan, amber, or lime light). An example of a lighting assembly usable as the second light source is described in U.S. Patent No. 10,141,533, and available under the brand name Secant® from United Technologies Corporation of Farmington, CT.

The second light source 206 may be located in the same enclosed space 202 as the first light source 204. In various embodiments, the second light source 206 may be configured as a complementary light source to the first light source 204 and, as such, may be located on a side wall of the enclosed space 202, on a floor of the enclosed space 202, or the like. In various embodiments, the second light source 206 may be configured as a display and the first light source 204 may be configured as a complementary light source.

Color rendering index (CRI) is a measurement that represents how various colors appear under a given light source relative to how the various colors appear under natural sunlight. CRI of sunlight is 100, and CRI of darkness is 0. It is desirable for any artificial light to have a CRI as close to that of sunlight as possible. However, many artificial light sources (especially those based on the RGB model, such as the first light source 204) may have a relatively low CRI (e.g., less than 50). In that regard, the light generated by the second light source 206 may complement the light generated by the first light source 204 such that the CRI of the combination of light from the first light source 204 and the second light source 206 is greater than the CRI of the first light source 204. This increase in CRI, as will be discussed further below, is due to an increased spectrum of light generated by the combination of the first light source 204 and the second light source 206.

The controller 208 may include a logic device such as one or more of a central processing unit (CPU), an accelerated processing unit (APU), a digital signal processor (DSP), a field programmable gate array (FPGA), an application specific integrated circuit (ASIC), or the like. In various embodiments, the controller 208 may further include any non-transitory memory known in the art. The memory may store instructions usable by the logic device to perform operations as described herein.

The controller 208 may be electrically coupled to the first light source 204 and the second light source 206. The controller 208 may be designed to analyze the spectrum of light generated by the first light source 204, and to control the second light source 206 to generate light having a spectrum that complements the spectrum of light generated by the first light source 204. That is, the controller 208 may control the second light source 206 such that the combined light has a greater spectral density, a more constant spectrum of visible light, or a greater CRI than the first light source 204 alone or the second light source 206 alone. The controller 208 may further control the first light source 204 in various embodiments. In various embodiments, the controller 208 may further analyze the light generated by the second light source 206 and may adjust control of the second light source 206 such that the combined light achieves a desired property (such as spectral density, constant spectrum of visible light, or CRI). In various embodiments, the controller 208 may analyze the combined light and control one or both of the first light source 204 or the second light source 206 in order to achieve a desired property.

The input device 210 may include any input device such as one or more buttons, switches, dials, a touchscreen, a microphone, or the like. The input device 210 may be designed to receive user input corresponding to a desired light in the enclosed space 202. The input corresponding to the desired light may include a desired brightness, a desired color, a desired pattern or features (e.g., if the first light source 204 is a display), or the like. The controller 208 may receive user input and may control the first light source 204 and the second light source 206 such that the combined light achieves the desired light received by the input device 210.

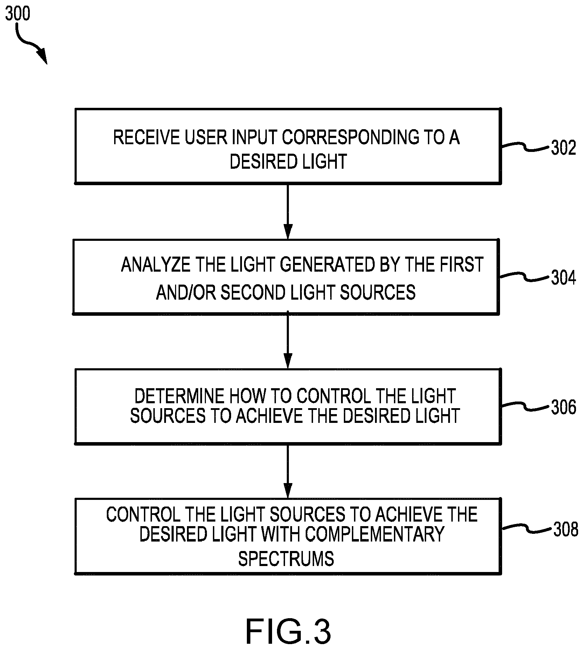

Referring now to FIG. 3, a method 300 for controlling light in an enclosed space is shown. The method 300 begins in block 302 where an input device receives user input corresponding to a desired light in the enclosed space. In block 304, a controller may analyze light generated by the first and/or second light sources (including, potentially, the combined light). The controller may, for example, compare the detected light to a desirable parameter (such as CRI). In block 306, the controller may determine how to control the light sources to achieve the desired light, e.g., based on the spectrum of the first light source and/or the second light source (as analyzed in block 304). In block 308, the controller may control two or more light sources (such as the first light source 204 and the second light source 206 of FIG. 2) to achieve the desired light by causing a spectrum of light generated by at least one of the light sources to complement the spectrum of at least another of the light sources.

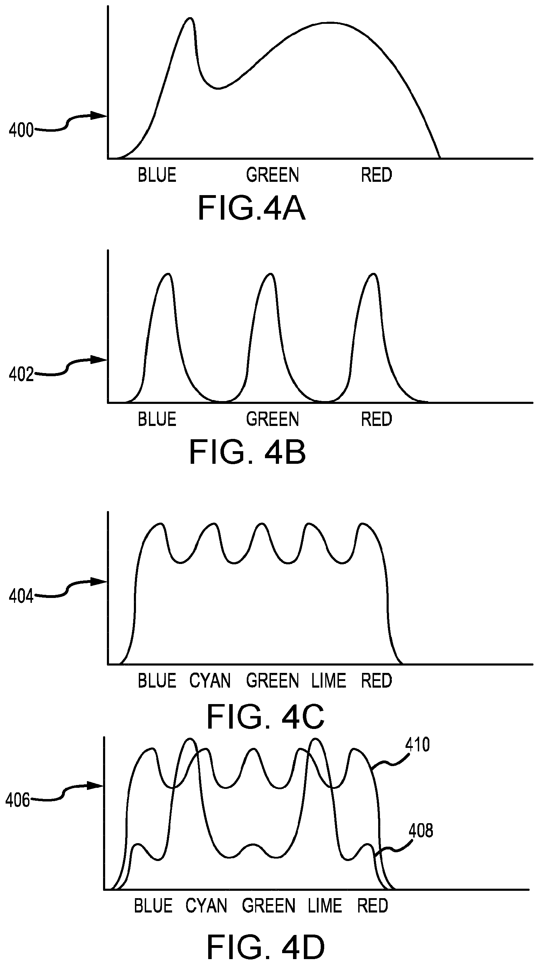

Referring now to FIGS. 4A, 4B, 4C, and 4D, various spectrum analyses are provided to illustrate the benefit of the system 200 of FIG. 2. A first spectrum analysis 400 illustrates the spectrum of light generated by a white LED. As shown, the spectrum of the white LED is relatively broad and constant across all colors, and has an approximate CRI of between 70 and 90.

A second spectrum analysis 402 illustrates the spectrum of light generated by a light source that is based on the RGB model. As shown, the spectrum peaks around red, green, and blue light, but has significant valleys between the red, green, and blue light. Accordingly, this CRI may be relatively low, such as between 30 and 40. The spectrum shown by the second spectrum analysis 402 may correspond to light generated by the first light source 204 of FIG. 2.

A third spectrum analysis 404 illustrates spectrum of light that may be generated by the Secant® light source. As shown, the spectrum is relatively broad and constant across all colors, and has an approximate CRI that approaches 100. However, the Secant® light source may be relatively expensive so it may be undesirable to use as the primary light source. In that regard, the Secant® light source may be used as the second light source 206 of FIG. 2. As an additional feature, a controller may adjust the spectrum of light output by the Secant® light source, which may allow it to complement a primary light source.

A fourth spectrum analysis 406 illustrates a controlled spectrum 408 of the Secant® light source designed to operate in conjunction with the spectrum shown in the second spectrum analysis 402 (e.g., the RGB-based light source). A resulting spectrum 410 illustrates the spectrum of the combined first light source (RGB-based) and second light source (non-RGB-based). As shown, the resulting spectrum 410 is relatively broad and constant across all colors, and has a CRI that approaches 100. Thus, the combination of the first light source 204 and the second light source 206 of FIG. 2 provides advantages over the first light source 204 and the second light source 206 alone.

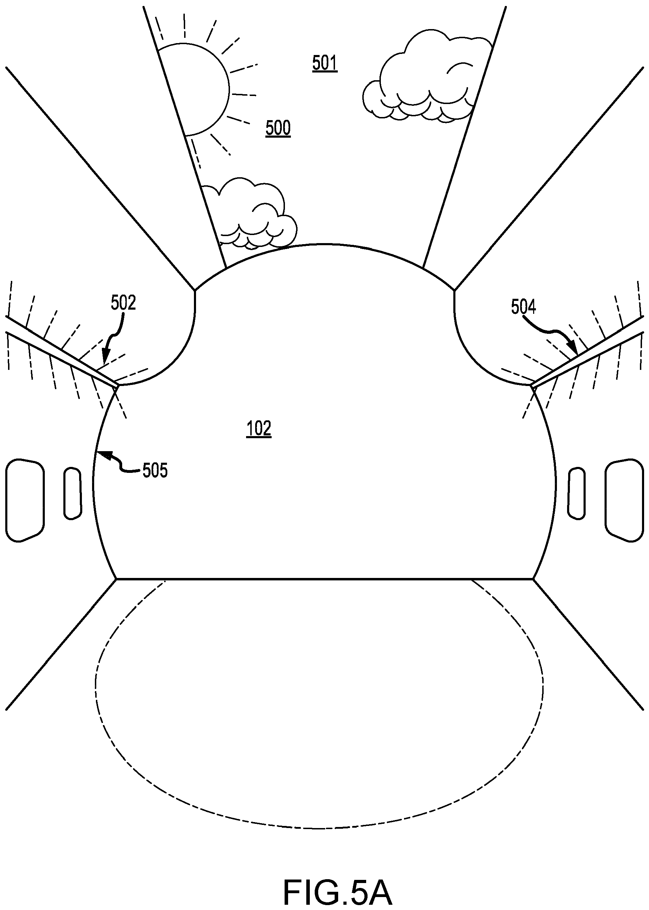

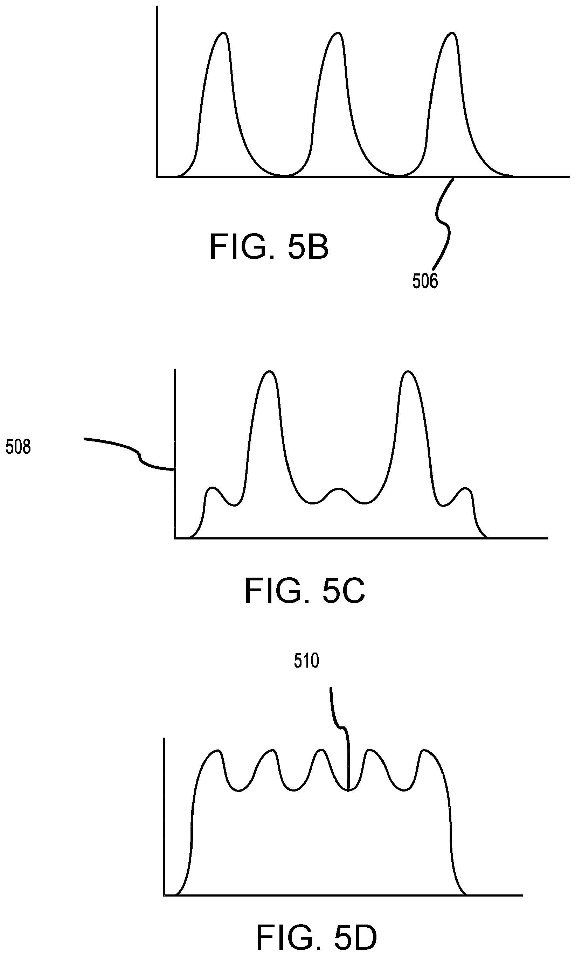

Referring now to FIGS. 5A, 5B, 5C, and 5D, an exemplary implementation of the system 200 of FIG. 2 in the aircraft 100 of FIG. 1 is shown. In particular, a system similar to the system 200 of FIG. 2 is implemented in the aircraft cabin 102. The system includes a first light source 500, which may include a RGB display on a ceiling 501 of the cabin 102. The system further includes second light sources 502 and 504 located on the sidewalls 505 of the aircraft cabin 102 as auxiliary lights. The second light sources 502, 504 may be Secant® light sources or other light sources capable of generating light of a different spectrum than the first light source 500. A first spectrum analysis 506 illustrates the spectrum of light generated by the first light source 500, and a second spectrum analysis 508 illustrates the spectrum of light generated by second light sources 502 and 504. A third spectrum analysis 510 illustrates the spectrum of light generated by the combination of the first light source 500 and the second light sources 502 and 504. As shown, the spectrum of light generated by the combination is relatively broad and constant across all colors, and has a desirably high CRI.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A system (200) for providing full spectrum light in an enclosed space, the system comprising:
a first light source (204) based on a red-green-blue (RGB) model, located in the enclosed space, and configured to generate a first light; and
a second light source (206) separate from the first light source, based on an alternative to the RGB model, located in the enclosed space, and configured to generate a second light such that a combination of the first light and the second light has a greater color rendering index (CRI) than the first light alone.

2. The system of claim 1, wherein the first light source (204) is configured as a display in the enclosed space and the second light source (206) is configured as a complementary light source.

3. The system of claim 1 or 2, further comprising a controller (208) coupled to the first light source (204) and the second light source (206) and configured to control the second light source to generate the second light to complement a spectrum of the first light such that the combination of the first light and the second light results in a more constant spectrum of visible light than the first light alone or the second light alone, and optionally further comprising an input device (210) coupled to the controller and configured to receive user input corresponding to a desired light in the enclosed space, wherein the controller is further configured to control the first light source and the second light source (20) to cause the combination of the first light and the second light to produce the desired light.

4. The system of any preceding claim, wherein the first light source (204) includes at least one of a light emitting diode (LED), an ultra LED, a micro-LED, an organic LED, a quantum dot LED, a liquid crystal display (LCD), a plasma display, or a projector; and optionally wherein the second light source includes an LED lighting assembly having at least one LED that is a color other than red, green, or blue.

5. The system of any preceding claim, wherein:
the first light source (204) includes first lighting elements configured to generate red, green, and blue light; and
the second light source (206) includes second lighting elements configured to generate at least one of cyan light, amber light, or lime light, or wherein the enclosed space is located in an aircraft.

6. A control system for providing full spectrum light in an enclosed space, the control system comprising:
a first light source (204) configured to generate a first light;
a second light source (206) separate from the first light source and configured to generate a second light that has a different spectrum from the first light;
a controller (208); and
a tangible, non-transitory memory configured to communicate with the controller (208), the tangible, non-transitory memory having instructions stored thereon that, in response to execution by the controller, cause the controller to perform operations comprising:
controlling the first light source (204) to generate the first light, and
controlling the second light source (206) to generate the second light such that a combination of the first light and the second light has a greater color rendering index (CRI) than the first light alone.

7. The control system of claim 6, wherein the first light source is based on a red-green-blue (RGB) model and the second light source (206) is based on an alternative to the RGB model.

8. The control system of claim 6 or 7, wherein the operations further comprise controlling the second light source to generate the second light to complement a spectrum of the first light such that the combination of the first light and the second light results in a more constant spectrum of visible light than the first light alone or the second light alone.

9. The control system of claim 8, wherein the operations further comprise:
analyzing at least one of the first light or the second light; and
determining how to control at least one of the first light source or the second light source based on results of the analyzing, or further comprising an input device configured to receive user input corresponding to a desired light, wherein the operations further comprise controlling the second light source based on the desired light.

10. The control system of any of claims 6 to 9, wherein the first light source (204) includes at least one of a light emitting diode (LED), an ultra LED, a micro-LED, an organic LED, a quantum dot LED, a liquid crystal display (LCD), a plasma display, or a projector, and the second light source (206) includes an LED lighting assembly having at least one LED that is a color other than red, green, or blue.

11. The control system of any of claims 6 to 10, wherein: the first light source (204) includes first lighting elements configured to generate red, green, and blue light; and the second light source (206) includes second lighting elements configured to generate at least one of cyan light, amber light, or lime light.

12. A method for providing full spectrum light in an enclosed space, the method comprising:
generating, by a first light source (204) that is based on a red-green-blue (RGB) model, first light; and
generating, by a second light source (206) that is separate from the first light source and is based on an alternative to the RGB model, a second light such that a combination of the first light and the second light has a greater color rendering index (CRI) than the first light alone.

13. The method of claim 12, further comprising controlling, by a controller (208), the second light source (206) to generate the second light to complement a spectrum of the first light such that the combination of the first light and the second light results in a more constant spectrum of visible light than the first light alone or the second light alone.

14. The method of claim 12 or 13, further comprising analyzing, by the controller (208), at least one of the first light source or the second light source, and determining, by the controller, how to control at least one of the first light source or the second light source (260) based on results of the analyzing, or further comprising receiving, by an input device, user input corresponding to a desired light, and controlling, by the controller, the second light source based on the desired light.

15. The method of any of claims 12 to 14, wherein the first light source includes at least one of a light emitting diode (LED), an ultra LED, a micro-LED, an organic LED, a quantum dot LED, a liquid crystal display (LCD), a plasma display, or a projector, and the second light source includes an LED lighting assembly having at least one LED that is a color other than red, green, or blue.
